# EUROPEAN PATENT APPLICATION

(11) **EP 2 489 278 A1**
(43) Date of publication of application: **22.08.2012**
(21) Application number: 10790608.3
(22) Date of filing: 13.10.2010
(51) Int. Cl.: A23L 1/00, A23L 1/212

(54) **EDIBLE DRIED FRUIT OR VEGETABLE PRODUCT WITH A CRUNCHY TEXTURE AND IN THE FORM OF A CLUSTER, AND A METHOD AND APPARATUS FOR PRODUCING SAID PRODUCT**

(30) Priority: 14.10.2009 CL 19652009
(71) Applicant: Agroindustrial Surfrut Ltda, Curicó (CL)
(72) Inventor: RODRIGUEZ CAMPISTO, Daniel Alberto, Curicó Chile (CL); SOTO PARDO, Patricio Alejandro, Curicó Chile (CL)
(74) Representative: Carpintero Lopez, Francisco
(86) International application number: PCT/CL2010/000044
(87) International publication number: WO 2011/044709

(57) **Abstract**

A food product based on dehydrated fruit or vegetable, and a method and equipment assembly for its production thereof, and use of said product as a tidbit or snack or as an additional or complementary ingredient in meals or in various food products such as cereals. The food product is comprised of substantially dry clusters of dehydrated and puffed fruit or vegetable pieces having an appealing shape and size, a crunchy texture and a palatable consistence. To produce the product, prepared fruit or vegetable pieces are dehydrated and puffed, the pieces are then homogeneously mixed with a liquid binder suitable for human or animal consumption and formed into clusters by compression-molding; then the clusters are dried to the desired end moisture contents. The main part of the equipment assembly for producing the product is a cluster forming device.

## Description

### Field of the Invention

The present invention refers to a dehydrated fruit or vegetable food product, a production method and equipment assembly thereof, a cluster forming device that is used in the production method of the present food product and is part of the equipment assembly for producing the food product; and use of said product as a tidbit or snack, or as an additional or complementary ingredient in meals or various food products. More particularly, the present invention refers to a healthy and crunchy natural food product in the form of clusters of dehydrated and puffed fruit or vegetable pieces, a production method and equipment assembly thereof, a cluster forming device, and use of the product as a snack or as an additional or complementary ingredient in meals or in various food products such as cereals.

### Prior Art

Several food products based on dehydrated fruit or vegetable pieces are known in the prior art, as well as methods associated with their production. Dehydration prevents food biodeterioration without sacrificing its nutritional properties, reduces its weight and volume to allow greater economy in its shipment and storage and allows a wide variety of end uses. When said food products are used as snacks, they are mostly in the shape of flakes or chips.

In general, in processes for producing food products an appealing end product is sought having also a flavor, consistency and/or texture agreeable to the palate. One key factor to obtain the above attributes is to confer a crunchy texture to the snack, and there are several dehydration and puffing techniques for this purpose based on different principles that allow to modify the cell structure of the dehydrated fruit or vegetable.

Chilean patent CL 43,956 describes a process for producing a dehydrated fruit or vegetable snack with a crunchy texture, obtained from several drying steps using hot air.

Publication JP 05-292914 teaches the preparation of a fruit or vegetable snack by expansion and drying under reduced pressure conditions, wherein the puffing of the fruit or vegetable is carried out by evacuation of the same from a reduced pressure condition.

Publication CN 1895086 describes a method for producing crunchy puffed apple slices (or blocks) using microwave pre-puffing, followed by puffing by pressure difference.

Snacks should further have a size that may allow for quick and easy consumption and handling, and that may also allow to combine them with other optional additional ingredients.

US Patent No. 4,055,675 discloses a food production process from bite size pieces of fruit, wherein the fruit is partially dehydrated and subsequently puffed and heated, puffing being obtained by immersing the fruit in liquid carbon dioxide under pressure, followed by a sudden expansion.

Publication WO200814532 teaches a molded snack comprising cereal-based flakes (at least 20%), agglomerated with a mixture of sugar and fat, wherein, in addition to the cereal, said flakes may include various dry vegetables, dry fruits and mixtures thereof.

### Disadvantages of the Prior Art

The present invention seeks to solve the following disadvantages and omissions observed in the above mentioned publications and patents, as well as in other documents of the prior art.

Well known snacks consisting of dehydrated fruit or vegetable pieces are usually provided in a fried state, obtained by frying the fruit or vegetable pieces under atmospheric pressure or under vacuum, said pieces containing between 12% and 30% of added fat, on this account not being perceived as a healthy food for human consumption.

On the other hand, snacks prepared on the exclusive base of dehydrated fruit or vegetables that are generally sliced in the form of flakes and chips, are visually unappealing and not very pleasing to the palate; moreover, the possibility of incorporating into them other ingredients and optional flavors, and conferring on them other physical shapes, is limited.

Finally, there are food products in cluster form, but these typically consist of puffed grains or seeds that may include small bits of dehydrated fruit mixed among the basic ingredients of the product, not crunchy clusters consisting of dehydrated pure fruit or vegetables, or based mainly on dehydrated fruits or vegetables.

Therefore, an object of the invention is to provide a natural and healthy food product based on dehydrated fruit or vegetable pieces that may be used mainly, but not exclusively, for direct consumption as a tidbit or snack.

Another object of the invention is to make said food product visually appealing and palatable, particularly to provide it with crispiness and an attractive shape.

A further object of the invention is to provide a simple and economical method and an equipment assembly for producing said product that may allow to generate a line of food products having, among other attributes, different shapes, contents, flavors and nutritional quality.

Finally, it is also an object of the invention to provide a cluster-forming device especially adapted to obtain clusters in the production of the food product of the present invention.

### Summary of the Invention

In order to achieve the above mentioned objectives, a natural and healthy food product has been developed that is formed by clusters of a plurality of small pieces of dehydrated fruit or vegetable of regular size, shape and weight, wherein the fruit pieces are also puffed and bound together by a liquid binder suitable for human or animal consumption, a method and equipment assembly for the production of said food product, and a device to form said clusters.

The food product according to the invention has a moisture percentage lower than about 2%, an appealing shape and size, a crunchy texture and a consistence pleasant to the palate. Said food product may be used mainly as a snack, although it may also be used for adding it directly to meals or used as an additional ingredient in other processed food, such as cereals. Optionally, said food product may also incorporate various additional ingredients in order to provide, enhance or emphasize desirable organoleptic and/or nutritional attributes.

In a preferred embodiment of the invention, the fruit piece clusters are spherical, having a size between about 15 mm and about 30 mm in diameter, while the fruit or vegetable pieces are cube-shaped and their size which in the fresh state is from about 3 mm to about 9 mm per side, is reduced to about 20%-30% when dehydrated.

The method for producing the food product according to the present invention comprises:
A) preparing the fresh raw material, that is to say the fruit or vegetable, by means of the following steps: i) rinsing, disinfecting and, if required, peeling, removing the pit or coring the fruit or vegetable, and ii) cutting the fruit or vegetable into pieces of regular shape, size and weight; in addition, and optionally after step A ii), the method further comprises: iii) treating the fruit or vegetable pieces with an anti-browning solution to prevent browning of the fruit or vegetable pieces during subsequent dehydration stages.
B) dehydrating and puffing the fruit or vegetable pieces to generate an intermediate product with a crunchy texture having a moisture contents lower than about 3%;
C) homogeneously mixing the intermediate product consisting of dehydrated and puffed fruit or vegetable pieces obtained in the preceding stage with a liquid binder suitable for human consumption, which may be an aqueous solution with binding additives, such as sugars and natural gums, to bind the fruit or vegetable pieces together;
D) forming clusters by compression and molding of the mixture of fruit or vegetable pieces with binder from the preceding stage; and
E) drying the cluster obtained in the preceding stage to remove excess water and recapture the crunchy texture of the fruit pieces that were re-moistened with binder addition.

The method optionally comprises the following additional steps:
1) prior to the first stage, selecting the fruit or vegetable by size, ripeness and other attributes;
2) either before or after dehydration and puffing, adding further optional natural ingredients to provide, enhance or emphasize organoleptic or nutritional characteristics of the final food product, such as flavor, color, nutritional contents, caloric contribution and texture, among others; for example, it is possible to add sucrose or another sweetener, citric acid or other flavor regulating ingredient, fruit or vegetable essences, fruit or vegetable pieces, granules or powders other than the dehydrated and puffed fruit or vegetable pieces; cereals or spices; natural flavorings and coloring substances; edible natural fiber, vitamins and antioxidant extracts, among other ingredients, and mixtures thereof; and
3) at the end of the final drying stage: cooling, inspecting and/or packing the product in packages having a high moisture barrier and cushioning means to protect from impacts the product obtained at the end of the final drying step.

The equipment assembly for producing the food product of the present invention comprises the following essential means:
1) means for cutting the fruit or vegetables into pieces of regular size, shape and weight;
2) means for dehydrating and puffing the fruit or vegetable pieces;
3) means for homogeneously admixing the dehydrated and puffed fruit or vegetable pieces with a liquid binder:
4) a cluster-forming device that comprises:
   a) means for feeding the dehydrated and puffed fruit or vegetable pieces, mixed with a liquid binder;
   b) a set of molding plates provided with recesses to receive the dehydrated and puffed fruit or vegetable pieces mixed with a liquid binder, each of said recesses having at least one through hole at its bottom thereof;
   c) compressing-forming punches with a free end that may be inserted into the molding plate recesses to compress the fruit or vegetable pieces mixed with a liquid binder against the bottom of said recesses, wherein said bottom of said recesses and said free ends are shaped in a way that correspond with the shape of the cluster desired to be formed; and
   d) means for demolding the clusters from the molding plates, comprising needles or other similar thin elongated element to displace the clusters out of the molding plate when said needles are inserted into said molding plate holes; and
5) drying means; and optionally
6) means for selecting fruit or vegetables by size, ripeness and other attributes;
7) means for rinsing, disinfecting and removing the rind, pit or core from the fruit and vegetables, if required;
8) means for treating the fruit and vegetable pieces with an anti-browning solution;
9) means for adding other natural ingredients to provide, enhance or emphasize the organoleptic and/or nutritional characteristics of the final food product; and
10) means for cooling, inspecting and packaging the product obtained at the end of the final drying stage.

The cluster forming device is similar to a compression-molding press, wherein the compressing-forming punches constitute the upper mold that mates with the press' movable plate, and the molding plates constitute the lower mold or die, that mates with or is attached to the press' fixed plate.

### Description of Drawings

Figure 1 illustrates the appearance of one embodiment of the food product according to the invention, which is made with apples.
Figure 2 illustrates a schematic drawing of the cluster-forming device according to the invention, configured to produce the food product of Figure 1 and showing (with arrows) the direction of movement of the elements making up the device.
Figure 3 illustrates a cross-sectional view of detail A of the device of Figure 2 showing part of a molding plate according to the present invention, adapted to produce the food product of Figure 1, at a stage immediately after the feeding stage.
Figure 4 illustrates a cross-sectional view of detail B of the device of Figure 2 showing part of the plurality of compressing-forming punches according to the present invention, adapted to produce the food product of Figure 1, at a stage immediately before the compression-molding stage of the fruit or vegetable pieces mixed with liquid binder that have been fed into the molding plate positioned under the compressing-forming punches.
Figure 5 illustrates a cross sectional view of detail C of the device of Figure 2 showing part of a molding plate according to the invention, adapted to produce the food product of Figure 1, at a stage immediately after the compression-molding stage.
Figure 6 illustrates a cross-sectional view of detail D of the device of Figure 2 showing part of a molding plate and needles of the demolding means, adapted to produce the food product of Figure 1, when inserted into the molding plate to demold the food product.

### Detailed Description of a Preferred Embodiment of the Invention.

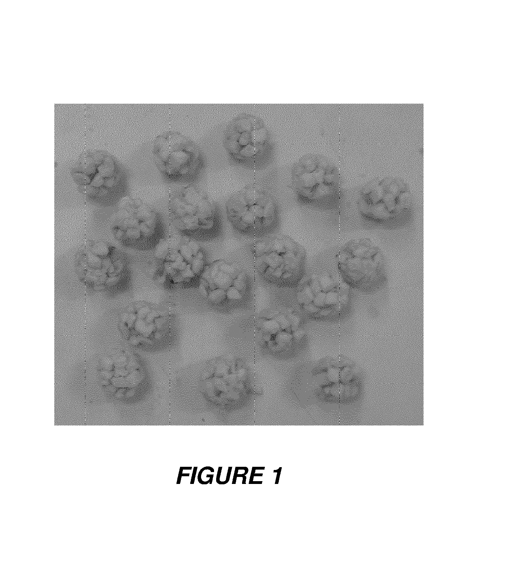

Figure 1 illustrates a particular embodiment of the food product according to the present invention that comprises an apple snack conformed by clusters consisting of small pieces of dehydrated apple, said clusters being of spherical shape with a diameter between approximately 18 and 20 mm.

The production method of the above-mentioned apple snack comprises the following essential stages:
A) preparation of the fresh raw material, i.e. apple;
B) dehydration and puffing of the prepared apple pieces obtained in stage A) to generate an intermediate product;
C) homogeneous admixture of the intermediate product obtained in stage B) with a liquid binder suitable for human or animal consumption;
D) formation of cluster from the homogeneous admixture obtained in stage C); and
E) drying of the clusters obtained in stage D).

The method optionally comprises the addition of further ingredients to improve organoleptic and/or nutritive characteristics of the final food product.

The stage of preparing fresh raw material, i.e. apple, consists mainly in cutting the apples into small pieces of regular size, shape and weight, preferably cubes of approximately ¼ inch (6 mm) per side, suitable to be subsequently conformed into clusters. In addition, the fresh apples have previously been rinsed and disinfected, for example, with chlorinated water having approximately 150-200 ppm of sodium hypochlorite or other disinfectant, after having previously been selected and calibrated, and peeled and cored by a mechanical process.

Once the apple has been cut into small pieces of regular size, shape and weight, said pieces are immersed in an anti-browning solution for a predetermined time to prevent browning. For example, apple pieces are immersed in sodium metabisulfite at a concentration of approximately 1,000 to 1,200 ppm for about 1 minute, in order to prevent browning during the subsequent dehydration stage.

The stage of drying the apple pieces and obtaining a crunchy texture of the same is performed by a non-continuous dehydration that allows to include a puffing stage. Thus, dehydration combined with puffing comprises a) an initial dehydration that consists in reducing the moisture contents of the apple pieces from a moisture percentage of approximately 82%, where apples are typically in their natural state, to an intermediate moisture percentage of approximately 20% to approximately 24%; next, b) subjecting the apple pieces or cubes to a joint thermal expansion and dehydration stage to modify the cell structure of the apple pieces and generate further drying; and then c) a final dehydration where apple pieces may achieve a final moisture percentage lower than approximately 2%.

For the initial dehydration a continuous hot air dryer of the Belt Dryer type is typically used, drying being divided into successive drying stages with predetermined ranges of temperature and time to carry out a gradual dehydration that will not damage the fruit pieces. In a first step said continuous dryer is operated at temperature ranges between approximately 110°C and approximately 120°C for a time of about 20 minutes to about 25 minutes. Then, in a second stage, the continuous dryer operates at temperatures between approximately 90°C and approximately 100°C for a time of about 40 minutes to about 50 minutes, and finally, in a last stage, the continuous dryer operates at temperatures between approximately 40°C and approximately 60°C for a time of about 60 minutes to about 70 minutes.

The joint thermal expansion and dehydration stage comprises: a) first contacting the apple pieces having an intermediate moisture contents obtained in the preceding initial dehydration stage, with carbon dioxide (CO₂) gas in order to displace the oxygen and partially dissolve it in the water contained in the apple cells. In this stage, the apple pieces are deposited in receptacles with a high gas barrier and, immediately, the CO₂ gas is injected at a ratio of 7 to 8 grams of CO₂ per kg of the apples, until reaching a pressure slightly higher than atmospheric pressure (not higher than 10% relative to atmospheric pressure), followed by sealing the receptacle and keeping it at rest for a minimum of 16 hours in an atmosphere with a temperature of about 0°C to about 3°C to accomplish a homogeneous gas dissolution; then b) removing from the receptacles the apple pieces or cubes contacted with the CO₂ and immediately introducing them into a second dryer under the following conditions: b.1) drying first the apple pieces or cubes by subjecting them to temperatures between approximately 85°C and approximately 95°C for a time of about 10 minutes to about 15 minutes, followed by b.2) transferring the apple pieces or cubes resulting from the preceding step to a second drying stage at temperatures between approximately 75°C and approximately 85°C for a time of about 30 minutes to about 40 minutes, with mechanical stirring to ensure a homogeneous dehydration.

This joint thermal expansion and dehydration stage may also be performed in a non-continuous dryer, in which case the apple pieces or cubes should be stirred for predetermined time periods, for example, approximately every 5 minutes.

Unlike traditional puffing systems using pressure difference, the expansion of the fruit or vegetable pieces of the present invention, in accordance with the herein described embodiment, is brought about by a sudden increase in temperature and not by pressure difference, thus allowing dispense with the need for special tanks and devices that operate at high pressures.

For admixing the already dehydrated and puffed fruit or vegetable pieces with a liquid binder suitable for human or animal consumption, an aqueous solution comprising binding additives may be used to bind the fruit or vegetable pieces together. In order to provide a healthy and economical food product, said liquid binder may preferably be concentrated natural juice from the fruit or vegetable from which the food product of the present invention is made, or a mixture of one or more natural juices from fruit or vegetables other than or similar to the principal fruit or vegetable from which the food product of the present invention is made. In the particular case of the present embodiment of the invention, said liquid binder may comprise concentrated natural apple juice.

In addition, other natural ingredients may optionally be added in this stage to provide, enhance or emphasize in the end product various organoleptic and/or nutritional attributes; these may be thickening, sweetening, flavoring and coloring agents, among others. Particularly, in the preferred embodiment described herein, potato starch powder, sucrose and/or citric acid may be added.

The stage of homogeneously admixing the fruit or vegetable pieces and binder together may be performed by mechanical means or any other means that ensures homogeneity of the same.

In the cluster forming stage, the already homogenized mixture of pieces of fruit or vegetable and a binder obtained in the preceding stage is fed to a cluster forming device, wherein clusters are formed by compression-molding. Clusters may be of various sizes, shapes and weights, and may be made up of several fruit and vegetable pieces. In the case of the preferred embodiment herein described, the clusters comprise 24 to 26 cubes of dehydrated and puffed apple per unit, admixed with a liquid binder ingredient.

In the stage wherein the already formed apple clusters undergo final drying, their moisture contents, which at the end of the forming stage shows a percentage moisture of approximately 4% to approximately 6%, is reduced to a percentage moisture under 1,5%. Said final value of the percentage moisture is preferably achieved by drying at temperatures between approximately 75°C and approximately 80°C, for a time of about 30 minutes to about 40 minutes.

After the final drying stage, optional steps of cooling, inspecting and packing in packages with a high moisture barrier and so as to cushion the product obtained in the final drying stage against possible bumps, and to avoid damaging the same, are included.

### Cluster Forming Device

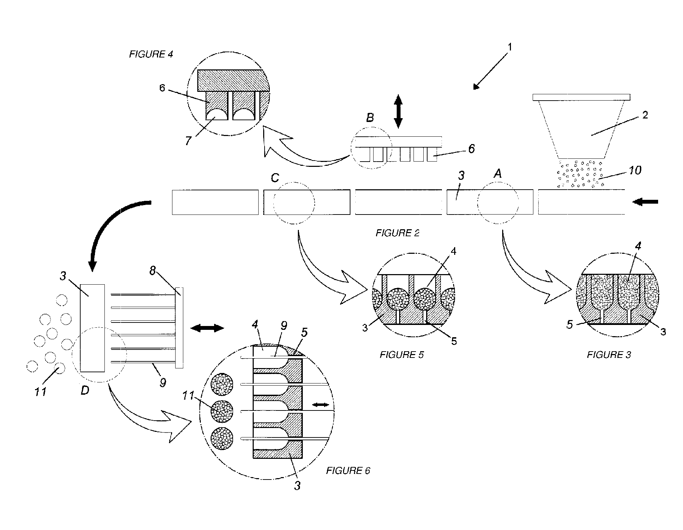

The cluster forming device (1) shown in Figure 2 is the main element in the equipment assembly useful in producing the food product of the present invention, particularly of the apple product of Figure 1, and comprises the following components:
1. Feeding means (2), consisting of a receptacle with one or more lower openings through which the dehydrated fruit or vegetables mixed with the liquid binder (19) is fed by gravity or pressure.
2. Molding plates (3), made of hygienic highly resistant and non-sticky material and provided with regularly spaced recesses (4). Each recess (4) has a central through hole (5) at its bottom. According to the illustration in Figure 3, the recesses (4) have a cylindrical shape with a semispherical bottom.

The molding plates may be located on a continuous conveyor (not shown) and may be sequentially driven by means of an electronic logic controller.
3. Compressing-forming punches (6), corresponding with a plurality and are arranged in a number equivalent to the number of recesses (4) of the molding plate (3), such that when the molding plate (3) is positioned below, the compressing-forming punches perfectly coincide with recesses (4). The compressing-forming punches (6) are made of hygienic material and have a free end of a shape and size that allows their insertion into the recesses (4) of molding plates (3). The compressing-forming punches (6) have a free end provided with a cavity (7) of semispherical shape and a diameter similar to that of the semisphere that makes up the bottom of the recesses (4) of the molding plates (3), thereby allowing to confer to the final food product (11) a semispherical shape of defined size.
4. Cluster demolding means (8), arranged on the opposite side of the molding plates (3) when taking as a reference the location of compressing-forming punches (6); they comprise needles that may be inserted into through holes (5) at the bottom of recesses (4) of the molding plates (3).

The cluster forming device may include other optional means selected from the following: application rollers to assist in introducing product into the recesses; one or more levelers to take away the excess product; demolding needles in the compressing-forming punches (6); cluster unloading means associated with the demolding means, and a rinsing device for the same.

### Operation of the Cluster Farming Device

As illustrated in Figure 2, the operation sequence_of the cluster-forming device is as follows:
1. The mixture (10) of dehydrated apple cubes with binder solution is continuously fed in an even layer on the molding plate (3), ensuring that the recesses receive the same amount of dehydrated apple cubes.
2. The molding plate (3) is advanced until it is placed under compressing-forming punches (6).
3. When the compressing-forming punches (6) are in a position that is coincident with the recesses (4) of molding plate (3), they are pneumatically or manually pushed down in order to compress the dehydrated apple cubes with binder (10) within the recesses (4) until they reach the limit of the stroke required to achieve adherence of the apple cubes and to confer a spherical shape to the clusters (11).
4. The clusters (11) shaped in this way remain within recesses (4) while molding plate (3) is advanced to the demolding means.
5. Needles (9) of the demolding means (8) are inserted into molding plate (3) via the through holes (5) at the bottom of the recesses, outwardly displacing from the molding plate (3)the already formed clusters (11), said clusters being received in an unloading means.

## Claims

1. A dehydrated fruit or vegetable food product, comprised of substantially dry clusters of dehydrated and puffed pieces of the fruit or vegetable in a rinsed and disinfected condition, and with the rind and pit or core, if any, of the fruit or vegetable removed.

2. The food product of claim 1, wherein said clusters have a spherical shape.

3. The food product of claim 2, wherein said spherical clusters have a size of between approximately 15 mm and approximately 30 mm in diameter, preferably between approximately 18 mm and approximately 20 mm in diameter.

4. The food product of claim 1, wherein the pieces of fruit are of regular shape, size and weight.

5. The food product of claim 4, wherein said fruit or vegetable pieces are cube-shaped.

6. The food product of claim 1, wherein said fruit is apple.

7. The food product of claim 1, wherein said liquid binder is selected from concentrated natural juice from a fruit or vegetable or mixture of fruit and vegetables.

8. The food product of claim 7, wherein said liquid binder is selected from concentrated natural juice from the same fruit or vegetable than said fruit or vegetable of the dehydrated and puffed fruit or vegetable pieces.

9. The food product of claim 1, wherein it has a moisture percentage lower than about 2%.

10. The product of claim 1, wherein it further comprises additional natural ingredients selected from the group consisting of thickening, sweetening, coloring and texturizing agents or mixtures thereof to provide, enhance or emphasize organoleptic and/or nutritional characteristics other than those associated with the original dehydrated and puffed fruit or vegetable pieces.

11. A method for producing a dehydrated fruit or vegetable food product, comprising:
A) preparing the fruit or vegetable in the following steps; A.i) rinsing, disinfecting, and removing rind and pit or core of the fruit or vegetable, if any; and A.ii) cutting the fruit or vegetable into pieces;
B) dehydrating and puffing the fruit or vegetable pieces to generate an intermediate product with a crunchy texture;
C) homogeneously admixing the dehydrated and puffed fruit or vegetable pieces obtained in stage B with a liquid binder suitable for human or animal consumption;
D) forming clusters by compression and molding of the admixture of fruit or vegetable pieces and liquid binder obtained in stage C;
E) drying the clusters obtained in stage D to substantially remove excess water and recapture the crunchy texture of the fruit pieces.

12. The method of claim 11, wherein prior to step A.i the fruit or vegetable has been selected according to size and/or ripeness.

13. The method of claim 11, wherein in stage A.ii the fruit or vegetable is cut into pieces of regular shape, size and weight.

14. The method of claim 13, wherein it comprises cutting the fruit or vegetable into cubes.

15. The method of claim 11, wherein after step A.ii) the method further comprises: A.iii) treating fruit or vegetable pieces with an anti-browning solution to prevent browning of the fruit or vegetable pieces during subsequent dehydration step.

16. The method of claim 11, wherein in stage B comprises dehydrating the pieces of fruit or vegetable to a percentage moisture lower than 3%.

17. The method of claim 11, wherein in stage B dehydration is performed in a non-continuous manner according to the following subsequent steps:
B.i) an initial dehydration that consists in reducing the moisture content of the fruit or vegetable pieces, from a percentage moisture that the fruit or vegetable typically has in its natural state, to a predetermined intermediate percentage moisture;
B.ii) subjecting the fruit or vegetable pieces to a joint thermal expansion and dehydration step to modify the cellular structure of the fruit and vegetable pieces and generate further drying; and
B.iii) subjecting the fruit or vegetable pieces to a final drying.

18. The method of claim 17, wherein step B.i is performed in subsequent drying steps with predetermined ranges of temperature and time and stage B.ii comprises:
depositing the pieces of fruit or vegetable in receptacles with a high gas barrier, and immediately injecting CO₂ to the receptacle at a predetermined ratio per kg of the fruit or vegetable until reaching a pressure not higher than 10% with respect to atmospheric pressure;
sealing the receptacle and keeping it at rest in an environment at a temperature between approximately 0°C and approximately 3°C for a predetermined time; and
removing the pieces of fruit or vegetable from the sealed receptacles and drying them in a second dryer.

19. The method of claim 18, wherein the subsequent drying steps of step B.ii are performed with mechanical stirring to ensure a homogeneous dehydration.

20. The method of claim 17, wherein stage B.ii is performed in a non-continuous dryer with stirring for predetermined time periods.

21. The method of claim 11, wherein it further comprises, either before of after stage B, the addition of further natural ingredients to provide, enhance or emphasize organoleptic and/or nutritional characteristics of the food product.

22. The method of claim 11, wherein the admixture with liquid binder is performed with mechanical stirring.

23. The method of claim 11, wherein it comprises forming clusters of various sizes, shapes and weights.

24. The method of claim 11, wherein it comprises forming clusters of spherical shape.

25. The method of claim 11, wherein at the end of stage E the method further comprises: cooling, inspecting and/or packing in packages with a high moisture barrier and cushioned against bumps on the product obtained at the end of the drying stage.

26. The method of claim 15, wherein the fruit is apple and stage A) comprises disinfected in chlorinated water containing approximately 150-200 ppm sodium hypochlorite, removing the rind and the center, cutting the apples into cubes of approximately ¼ inch (6 mm) per side and immersing the apple pieces in sodium metabisulfite at a concentration of about 1,000 to 1,200 ppm, for about 1 minute.

27. The method of claims 18 and 26, wherein stage B.1 comprises reducing the percentage moisture contents of the apple pieces to about 20% to 24% according to the following subsequent stages:
drying the apple pieces at a temperature ranges between approximately 110°C and approximately 120°C for about 20 minutes to about 25 minutes;
drying the apple pieces at a temperature between approximately 90°C and approximately 020°C for about 40 minutes to about 50 minutes; and
reducing the percentage moisture contents of the apple pieces to less than about 2% by drying the apple pieces at temperatures between approximately 40°C and approximately 60°C for about 60 minutes to about 70 minutes, and
stage B.ii includes:
injecting CO₂ gas into the sealed high gas barrier receptacles with apple pieces deposited in them at a ratio of approximately 7 to 8 CO₂ grams per Kg of the apples;
after the CO₂ injection, keeping the apple pieces at rest in the sealed receptacles for at least 16 hours in an environment at a temperature between approximately 0°C and approximately 3°C; and
in the second dryer, drying the apple pieces removed from the sealed receptacles according to the following subsequent stages:
drying apple pieces by exposure to temperatures between approximately 85°C and approximately 95°C for a time from about 10 minutes to about 15 minutes; and
passing the apple pieces from the preceding step to an additional drying step with temperatures between approximately 75°C and approximately 85°C for a time from about 30 minutes to about 40 minutes.

28. The method of claim 26, wherein it comprises forming clusters consisting of 24 to 26 apple cubes per unit.

29. The method of claim 27, wherein in stage E the percentage moisture content is reduced to less than about 1.5% by drying at temperatures between approximately 75°C and approximately 80°C, for a time from about 30 minutes to about 40 minutes.

30. An equipment assembly for the production of a dehydrated fruit or vegetable food product, comprising:
means for rinsing, disinfecting, and removing the rind and pit or core of the fruit or vegetable, if any, and cutting the fruit or vegetable into pieces;
means for dehydrating and puffing the fruit or vegetable pieces;
means for homogeneously admixing the dehydrated and puffed fruit or vegetable pieces with a liquid binder;
means for forming clusters of the admixture of dehydrated and puffed fruit or vegetable and liquid binder by compression and molding; and
means for drying the clusters.

31. The equipment assembly of claim 30, wherein the means for forming clusters of dehydrated and puffed fruit or vegetable pieces comprises a device that includes receptacle having one or more lower openings for feeding by gravity or pressure the admixture of dehydrated fruit or vegetable pieces and liquid binder to a set of molding plates provided with recesses for receiving the admixture of dehydrated and puffed fruit or vegetable pieces and liquid binder, each of said recesses having at least one through hole at the bottom thereof, the device further comprising:
compressing-forming punches with a free end that may be inserted in the molding plate recesses to press the fruit and vegetable pieces mixed with the liquid binder against the bottom of said recesses; and
needles or other similar elongated and thin element insertable into said molding plate holes for demolding and displacing the clusters from the molding plate.

32. The equipment assembly of claim 30, wherein it further comprises means selected from the group consisting of:
means for selecting the fruit or vegetable by size and ripeness;
means for rinsing, disinfecting and removing skin, and pit or core of the fruit or vegetable, if any;
means for treating the fruit or vegetable pieces with an anti-browning solution;
means for adding further ingredients to provide, enhance or emphasize the organoleptic and/or nutritional characteristics of the end food product;
means for cooling, inspecting and packing the product obtained at the end of the final drying stage; or
groupings of the same.

33. The equipment assembly of claim 30, wherein the means for cutting the fruit or vegetable into pieces comprise means for cutting the fruit or vegetable into pieces of regular size, shape and weight.

34. The equipment assembly of claim 31, wherein said molding plates are made of a hygienic and highly resistant non-sticky material and are provided with regularly spaced recesses.

35. The equipment assembly of claim 31, wherein the molding plates are located on a continuous conveyor and are sequentially moved by the action of an electronic logic control.

36. The equipment assembly of claim 31, wherein the compressing-forming punches are plural and arranged in number equivalent to the number of recesses on the molding plate such that, when the molding plate is positioned under the recesses, the compressing-forming punches perfectly coincide with said recesses.

37. The equipment assembly of claim 36, wherein the compressing-forming punches are made of a hygienic material, with a free end, and they have a size and shape suitable to allow their introduction into the molding plate recesses.

38. The equipment assembly of claim 37, wherein the recesses have a cylindrical shape with a semispherical bottom and the compressing-forming punches have a free end with a cavity of semispherical shape and a diameter similar to that of the semisphere conforming the bottom of molding plate recesses.

39. The equipment assembly of claim 31, wherein the needles or other similar thin element for demolding clusters are arranged on the opposite side of the molding plates when taking as reference the location of compressing-forming punches.

40. The equipment assembly of claim 31, wherein it further comprises additional means selected from the group consisting of: applicator rollers to help introducing the product into the recesses; one or more levelers to remove excess product; demolding needles in the compressing-forming punches; means for unloading clusters associated to the demolding means; and a rinsing device for the same.

41. The equipment assembly of claim 31, wherein it further comprises pneumatic or manual driving means to push down compressing-forming punches when the position of the latter coincide with the molding plate recesses.

42. Use of the food product of claim 1 for making a tidbit or snack or as an additional ingredient or complement in meals or various food products such as cereals.
